Europäisches Patentamt

European Patent Office

Office européen des brevets

(11) Numéro de publication: **0 375 567**
**A1**

## DEMANDE DE BREVET EUROPEEN

(21) Numéro de dépôt: 89420455.1

(22) Date de dépôt: 21.11.89

(51) Int. Cl.⁵: **B62L 1/00**

(30) Priorité: 19.12.88 FR 8817620

(43) Date de publication de la demande:
27.06.90 Bulletin 90/26

(84) Etats contractants désignés:
AT BE CH DE ES GB GR IT LI LU NL SE

(71) Demandeur: ETABLISSEMENTS LAUZIER
12 Route de Saint Jean
F-38300 Bourgoin Jallieu Isère(FR)

(72) Inventeur: Lauzier, René
Ruy
F-38300 Bourgoin Jallieu(FR)

(74) Mandataire: Bratel, Gérard et al
Cabinet GERMAIN & MAUREAU B.P. 3011
F-69392 Lyon Cédex 03(FR)

(54) Patin de frein sur jante pour cycles et véhicules similaires.

(57) Le patin de frein (1) selon l'invention possède, à l'une au moins de ses extrémités, une face en biseau (13,14) située dans un plan (P) formant un angle (A) différent de 90° par rapport à la direction d'une droite (D) tangente à la jante (2) dans la région de ce patin de frein. La ou chaque face en biseau (13,14) est tournée vers le centre de la roue associée (3).

Ainsi, l'eau pouvant être amenée par la jante (2) est renvoyée vers le bras et éliminée, ce qui améliore le freinage en ambiance humide.

FIG.3

## Patin de frein sur jante pour cycles et véhicules similaires

La présente invention concerne les patins de freins sur jantes, pour les cycles et autres véhicules similaires, devant fonctionner sous la pluie et à sec.

Les freins de cycles comprennent habituellement deux patins disposés de part et d'autre d'une jante de roue, et portés par des étriers à branches montées pivotantes sur le cadre ou la fourche. Un dispositif de commande par câble sous gaine ou autre, avec tirage latéral ou central, permet de faire pivoter les branches de l'étrier en sens opposés, de manière à provoquer le rapprochement des deux patins et leur application sur les flancs de la jante avec une pression plus ou moins forte.

Les patins de freins pour cycles sont généralement des pièces moulées en caoutchouc ou autre matière souple, montées sur des porte-patins rigides. Pour améliorer le freinage, on peut intervenir sur le choix de la matière des patins, ou sur la définition de leur géométrie. Ainsi, les faces de frottement des patins de freins sont souvent pourvues de plots ou de fentes, par lesquels on espère augmenter leurs performances.

Toutefois, le freinage en ambiance humide et notamment par temps de pluie pose toujours des difficultés mal résolues. En particulier, les fentes ou autres interstices présents sur les faces de frottement des patins ont tendance à retenir l'eau, alors qu'il faudrait au contraire l'évacuer, et amènent ainsi une "lubrification" de la jante qui s'oppose à un freinage efficace.

La présente invention vise à éliminer ces inconvénients, en fournissant des patins de freins sur jantes perfectionnés qui ne retiennent pas l'eau et qui, au contraire, parviennent à l'évacuer, de sorte que le freinage en ambiance humide s'en trouve amélioré de façon sensible.

A cet effet, l'invention a essentiellement pour objet un patin de frein sur jante pour cycles et véhicules similaires qui possède, à l'une au moins de ses extrémités, une face en biseau située sensiblement dans un plan formant un angle différent de 90° par rapport à la direction d'une droite tangente à la jante dans la région de ce patin de frein, la ou chaque face en biseau du patin de frein étant tournée vers le centre de la roue associée.

Ainsi, à l'extrémité du patin de frein située du côté où la jante "arrive" vers le frein lorsque la roue tourne dans le sens normal, il existe une face en biseau qui non seulement arrête l'eau amenée par ladite jante, mais encore renvoie cette eau vers le centre de la roue donc vers le bas, et parvient ainsi à éliminer cette eau. L'effet obtenu de séchage de la jante est ici d'autant plus sensible que le patin est empêché de retenir l'eau, et à cet égard le patin de frein selon l'invention comporte avantageusement une face de frottement entièrement lisse, et non pas pourvue de fentes ou d'autres interstices.

De préférence, le patin de frein objet de l'invention possède deux faces en biseau, respectivement à ses deux extrémités, ces deux faces en biseau étant inclinées en sens inverses. Cette configuration parfaitement symétrique du patin de frein permet de monter le même patin dans un sens indifférent, à droite ou à gauche et sur un frein avant ou arrière, en conservant toujours la même efficacité dans la fonction d'évacuation de l'eau.

Suivant une autre caractéristique avantageuse, la ou chaque face en biseau du patin de frein selon l'invention forme un angle compris entre 50° et 70° par rapport à la direction d'une droite tangente à la jante dans la région de ce patin de frein.

La ou chaque face en biseau du patin de frein peut, selon une disposition complémentaire, former aussi un angle différent de 90° par rapport au plan de la jante, en étant tournée latéralement au moins légèrement vers l'extérieur de la roue. Ainsi, l'eau est renvoyée sur le côté de la roue et ne risque plus de retomber sur la jante, de sorte que son evacuation est rendue encore plus sûre.

La configuration particulière du patin, avec une ou deux faces en biseau, peut être obtenue directement par moulage ou par coupe oblique à la forme désirée, sans aucune opération de fabrication ou pièce supplémentaire. Par ailleurs, l'utilisation du patin objet de l'invention ne nuit en aucun cas aux qualités du freinage en ambiance sèche.

De toute façon, l'invention sera mieux comprise à l'aide de la description qui suit, en référence au dessin schématique annexé représentant, à titre d'exemple non limitatif, une forme d'exécution de ce patin de frein sur jante :

Figure 1 est une vue de face, avec coupe partielle, d'un frein de cycle équipé de patins conformes à l'invention ;

Figure 2 est une vue en perspective d'un patin seul ;

Figure 3 est une vue de côté schématique du patin et d'une portion de jante, illustrant le fonctionnement de ce patin.

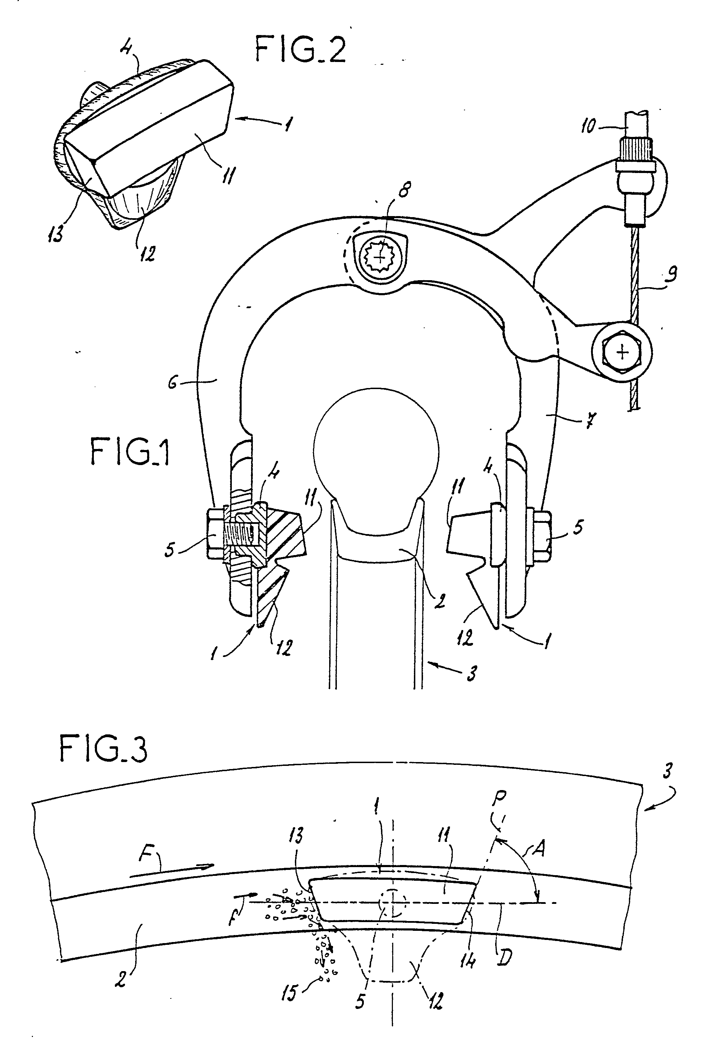

La figure 1 représente, à titre d'exemple d'application non limitatif, un frein de cycle à tirage latéral, pourvu de deux patins 1 conformes à la présente invention.

D'une manière connue, les deux patins 1 sont disposés en vis-à-vis, de part et d'autre de la jante 2 d'une roue de cycle 3. Chaque patin 1, réalisé dans une matière souple, est monte sur un porte-patin 4 en matière rigide, notamment en métal. Les deux porte-patins 4 sont eux-mêmes fixés, au moyen de vis 5, sur des branches respectives 6 et 7. Dans le cas pris ici pour exemple d'un frein à tirage latéral, les deux branches 6 et 7 sont montées pivotantes autour d'un même axe 8 situé dans le plan médian de la roue 3, ces deux branches 6 et 7 présentant des formes distinctes. La commande à distance du frein est assurée par exemple au moyen d'un câble 9 coulissant dans une gaine 10 et permettant de faire pivoter les deux branches 6 et 7 en sens inverses autour de l'axe 8 ; les deux patins 1 sont alors rapprochés l'un de l'autre, et ils s'appliquent sur les flancs de la jante 2 par leurs faces de friction 11 situées en vis-a-vis, ce qui provoque l'effet de freinage.

Les deux patins 1 sont ici prolongés, en direction de l'axe de la roue 3, par des parties inclinées 12 formant ensemble un "V", et servant à centrer la roue lors du montage de celle-ci. L'existence ou l'absence de telles parties 12 est toutefois indifférente, vis-a-vis de l'objet de la présente invention.

Chaque patin de frein 1 représenté aussi isolé sur la figure 2 possède à ses deux extrémités des faces en biseau, respectivement 13 et 14, inclinées en sens inverses. Plus particulièrement, comme l'indique la figure 3, chaque face en biseau 13 ou 14 est située dans un plan P qui forme un angle A différent de 90°, par rapport à la direction d'une ligne droite D tangente à la jante 2 dans la région du patin de frein 1 considéré. Le sens d'inclinaison de chaque face en biseau 13 ou 14 est tel que cette face est tournée au moins approximativement vers le centre de la roue 3.

Ainsi, lorsque le cycle roule par temps de pluie, la roue 3 tournant dans le sens de la flèche F, l'eau entraînée suivant la flèche f par les flancs de la jante 2 vient en quelque sorte percuter la face en biseau 13 (par exemple), et cette eau est renvoyée vers le bas sous forme de gouttelettes 15 et éliminée, comme l'illustre la figure 3. Ce résultat d'évacuation de l'eau est d'autant plus sensible que les faces de friction 11 des patins 1 sont lisses, et non pas pourvues de fentes ou d'autres interstices qui ont pour inconvénient de retenir l'eau.

Des essais rigoureux effectués par le Demandeur ont confirmé l'amélioration obtenue grâce aux dispositions selon l'invention, et ils ont démontré que l'amélioration par rapport à des patins de freins classiques, donc dépourvus de faces en biseau, est d'autant plus forte que l'effort de traction sur le câble de commande 9 est élevé. Ces essais ont aussi permis d'établir que des résultats avantageux peuvent être obtenus avec des faces en biseau 13 et 14 dont les angles d'inclinaison A (tel que défini plus haut) sont compris entre 50° et 70°.

Plus précisément, les essais effectués ont montré que l'influence de l'angle commence à se faire sentir à 70° mais qu'entre 70 et 50°, la différence est relativement faible. Avec des patins de même matière pour obtenir un freinage de 20 kg, la jante et le patin étant arrosés en permanence, il faut avec un patin classique, muni de dessins dans la partie qui frotte sur la jante, un effort dépassant 60 kg à la poignée, dans le cas d'un patin sans dessin et coupé à angle droit, il faut 45 kg ou 38 kg d'effort selon la matière.

Avec les mêmes matières, le patin ayant des faces en biseau inclinées de 70°, l'effort nécessaire à la poignée passe à 37 kg dans le premier cas et à 32 kg dans le second cas.

Il est convenu naturellement de roder les patins à la forme de la jante pour obtenir des résultats homogènes ceci se fait après 5 ou 7 freinages.

La force développée par la main d'un homme étant au maximum de 50 kg environ (ce qui dépend de la force de l'homme évidemment), l'intérêt de l'invention apparaît ici immédiatement.

L'existence des deux faces en biseau 13 et 14 permet un montage réversible du patin 1, par rapport au sens de rotation de la roue 3, en conservant dans tous les cas le résultat décrit plus haut.

Le domaine d'application de l'invention n'est nullement limité aux freins à tirage latéral, mais il englobe aussi les freins à tirage central, et il peut s'agir non seulement de freins de cycle, mais aussi de freins pour tous autres véhicules similaires, tels que cyclomoteurs, avec des moyens de commande à distance quelconques, de type mécanique ou hydraulique.

**Revendications**

1. Patin de frein sur jante pour cycles et véhicules similaires, caractérisé en ce qu'il possède, à l'une au moins de ses extrémités, une face en biseau (13,14) située sensiblement dans un plan (P) formant un angle (A) différent de 90° par rapport à la direction d'une droite (D) tangente à la jante (2) dans la région de ce patin de frein (1), la ou chaque face en biseau (13,14) de ce patin de frein (1) étant tournée vers le centre de la roue associée (3).

2. Patin de frein selon la revendication 1, caractérisé en ce qu'il possède deux faces en biseau (13,14), respectivement à ses deux extrémités, ces deux faces en biseau (13,14) étant inclinées en sens inverses.

3. Patin de frein selon la revendication 1 ou 2, caractérise en ce que la ou chaque face en biseau (13,14) de ce patin de frein (1) forme un angle (A) compris entre 50° et 70° par rapport à la direction d'une droite (D) tangente à la jante (2) dans la région de ce patin de frein (1).

4. Patin de frein selon l'une quelconque des revendications 1 à 3, caractérisé en ce que la ou chaque face en biseau (13,14) de ce patin de frein (1) forme aussi un angle différent de 90° par rapport au plan de la jante, en étant tournée latéralement au moins légèrement vers l'extérieur de la roue.

5. Patin de frein selon l'une quelconque des revendications 1 à 4, caractérisé en ce qu'il possède une face de friction lisse (11).

FIG.2

FIG.1

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | FR-A-2495563 (YOSHIGAI KIKAI KINZOKU) * page 6, ligne 9 - page 7, ligne 38; figures 1-13 * | 1 | B62L1/00 |
| A | FR-A-2405175 (ANGENIEUX-CLB) * le document en entier * | 1 | |
| A | FR-A-1000330 (MARCEL-EMILE GILET) | | |
| A | GB-A-681820 (THE MONITOR BRAKE COMPANY) | | |

DOMAINES TECHNIQUES RECHERCHIES (Int. Cl.5 )

B62L
F16D

Le présent rapport a été établi pour toutes les revendications

| Lieu de la recherche | Date d'achèvement de la recherche | Examinateur |
|---|---|---|
| LA HAYE | 26 MARS 1990 | HARTEVELD C.D.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.......................................................
& : membre de la même famille, document correspondant

EPO FORM 1503 03.82 (P0402)